# EUROPEAN PATENT APPLICATION

(11) **EP 2 130 707 A2**
(43) Date of publication of application: **09.12.2009**
(21) Application number: 09007275.2
(22) Date of filing: 01.06.2009
(51) Int. Cl.: B60K 1/04, H01M 2/10, H01M 2/20, H01M 10/42

(54) **Individual-charge and merged-discharge battery set**

(30) Priority: 02.06.2008 CN 200820094374 U; 11.07.2008 TW 97212377 U
(71) Applicant: Apex Science Co. Ltd., Da-an District 106 Taipei City (TW)
(72) Inventor: Yang, Iuan-Jou, 106 Taipei City (TW)
(74) Representative: Altenburg, Bernardus Stephanus Franciscus

(57) **Abstract**

A battery set composed of multiple cells is assembled in a way of individual-charge/merged-discharge. The battery set assembled in the way of the present invention can achieve the highest charge efficiency and maintain balance among multiple cells such that the whole battery set has the largest discharge capacity, and the operating life of the battery set is prolonged. The terminal of the charge tip of the battery set assembled in the way of the present invention is a multi-pin charge terminal.

## Description

### BACKGROUND OF THE INVENTION

### 1. Field of the Invention

The present invention relates to a battery set, and more particularly, to a battery set assembled in a way of individual-charge and merged-discharge.

### 2. Description of the Related Art

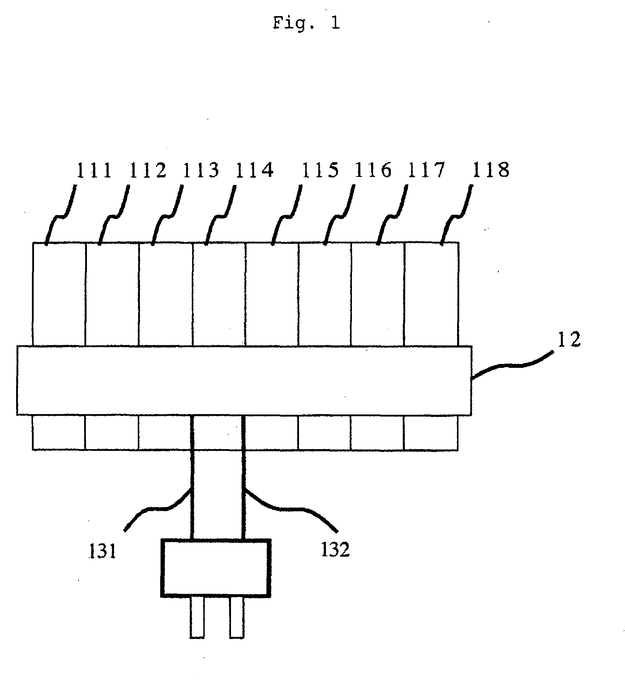

FIG. 1 illustrates a way of assembly of a prior art battery set composed of multiple cells. Please refer to FIG. 1. In the prior art, multiple cells, for example, cells 111, 112, 113, 114, 115, 116, and 117, are jointly coupled to each other. Circuit board 12, which serves to control charge and discharge, couples multiple cells 111, 112, 113, 114, 115, 116, 117, and 118 together. Thus, charge and discharge are both via power cords 131, 132.

In the prior art, charge and discharge are both via power cords 131, 132. Thus the way of assembly of the battery set tends to bring problems about maintaining balance among multiple cells. Especially when the number of cells goes larger, it becomes more difficult to maintain the balance; meanwhile, to select a single cell which meets the requirement of balance becomes more time-consuming.

Therefore, it is desirable to provide an innovative battery set to mitigate and/or obviate the aforementioned disadvantage.

### SUMMARY OF THE INVENTION

The objective of the present invention is to provide an assembly system of a battery set such that the battery set can achieve the highest charge efficiency and maintain balance among multiple cells.

The present invention is a battery set system assembled in a way of individual-charge/merged-discharge. The terminal of its charge tip is a multi-pin charge terminal, different from a two-pin charge/discharge terminal in the prior art. The system subdivides the internal part of the battery set composed of multiple cells into two or more units. Each unit has a charge circuit for independent charge; the discharge part of each unit is coupled to one another for discharge.

The present invention is characterized in that: the battery set composed of multiple cells is assembled in a way of individual-charge/merged-discharge. When the battery set composed of multiple cells is being charged, its internal part is subdivided into two or more units. Each unit has a charge circuit for independent charge. When the battery set composed of multiple cells is being discharged, it is done by a way of merged-discharge. The present invention has a capability of charge/discharge protection for the battery set. It is able to monitor an overall voltage of the battery set and a voltage of each cell to prevent over discharging. Moreover, the terminal of its charge tip is a multi-pin charge terminal.

Preferred embodiments of the invention are defined in the subclaims.

### BRIEF DESCRIPTION OF THE DRAWINGS

FIG. 1 is a schematic drawing of a way of assembly of a prior art battery set.
FIG. 2 is a schematic drawing of an individual-charge and merged-discharge battery set of the present invention.
FIG. 3 is a comparison drawing of a voltage test of the individual-charge and merged-discharge battery set of the present invention when it is fully charged and after it is discharged.

### DETAILED DESCRIPTION OF THE PREFERRED EMBODIMENT

The advantages and innovative features of the invention will become more apparent from the following detailed description when taken in conjunction with the accompanying drawings.

The way of assembly of a prior art battery set composed of multiple cells is to install multiple cells on a protection circuit board. Then the battery set can be charged and discharged. The way of assembly of an individual-charge and merged-discharge battery set of the present invention is different from that of the prior art battery set composed of multiple cells. The present invention subdivides the internal part of the battery set composed of multiple cells into two or more units. Each unit has a charge circuit for independent charging; the discharge part of each unit is coupled to one another for discharge. Therefore, the battery set of the present invention can be charged individually and are discharged together.

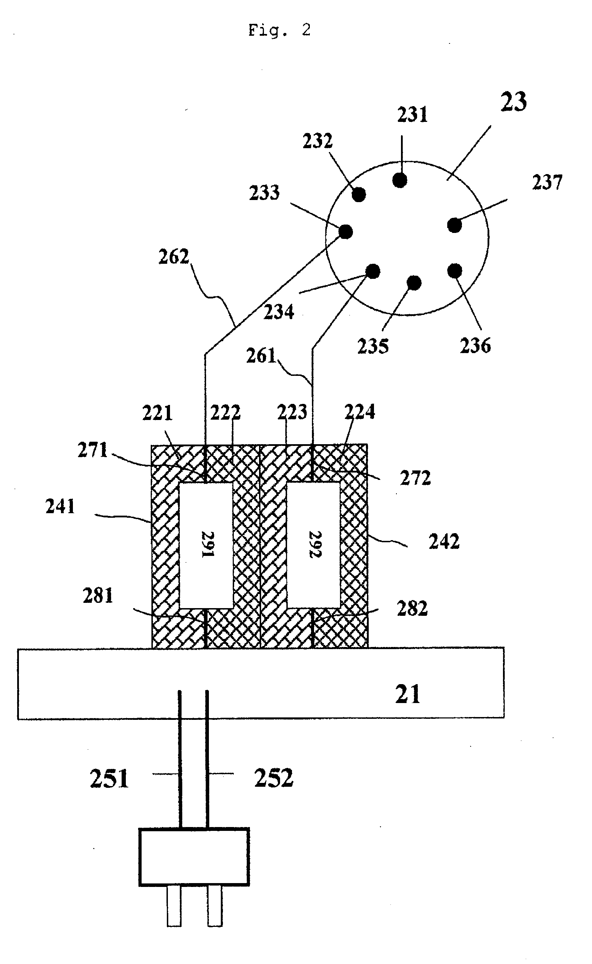

FIG. 2 is a schematic drawing of the individual-charge and merged-discharge battery set of the present invention.

Please refer to FIG. 2. The individual-charge and merged-discharge battery set of the present invention comprises: discharge circuit board 21, internal subdivided units 241 and 242, transmission power cords 261 and 262, multi-pin charge terminal 23, output power cords 251 and 252. The internal subdivided unit 241 ccomprises a circuit board 291 and two cells 221, 222; and the interal subdivided unit 242 comprises a circuit board 292 and two cells 223, 224. Multi-pin charge terminal 23 has several contact pins 231, 232, 233, 234, 235, 236, and 237, able to be connected to internal subdivided units 241 and 242 via transmission power cords 261 and 262. In one embodiment of the present invention, the multi-pin charge terminal 23 is connected to a power source (not shown) for supplying electrical power to the contact pins 231, 232, 233, 234, 235, 236 and 237. In one embodiment of the present invention, each of the power cords 251, 252, 261, or 262 is an assembly of two or more electrical conductors (such as a supply wire, a return wire, and a grounding wire) held together with an overall sheath, for transmitting electrical power.

When the individual charge and merged-discharge battery set according to the present invention is being charged, it is charged via multi-pin terminal 23. Internal subdivided units 241, 242 are used as independent charge units. The circuit boards 291, 292 of the internal subdivided units 241, 242 monitor the charge of the cells 221, 222, 223, 224. When the cells 221, 222, 223, 224 are fully charged, the circuit boards 291, 292 of internal subdivided units 241 and 242 discontinue electrical current automatically. When the individual-charge and merged-discharge battery set of the present invention is being discharged, multiple cells 221, 222, 223, and 224 are being discharged together via output power cords 251 and 252 of discharge circuit board 21; meanwhile, discharge circuit board 21 serves as means for preventing over discharge by monitoring the overall voltage of the battery set and the voltage of each of the multiple cells 221, 222, 223, and 224 to avoid over discharging multiple cells 221, 222, 223, and 224. Thus over discharging protection can be achieved. In one embodiment of the present invention, the individual-charge and merged-discharge battery set of the present invention is a lithium-ion battery set.

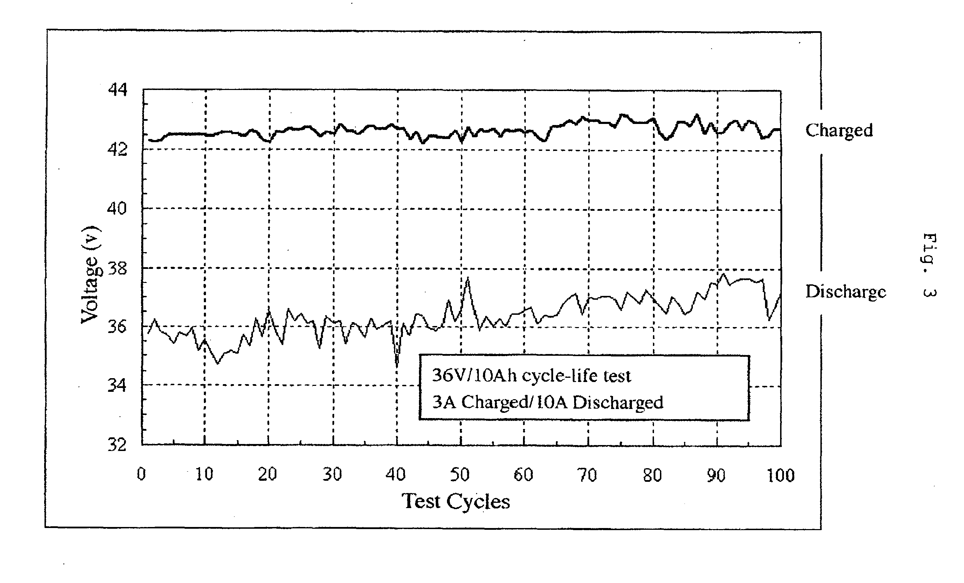

FIG. 3 is a comparison drawing of a voltage test of an individual-charge and merged-discharge lithium-ion battery set (36v/10Ah) when it is fully charged and after it is discharged in accordance with one embodiment of the present invention. The test includes cycling testing 100 times. As shown in FIG. 3, the voltages of the battery set when it is fully charged can all reach 42V. This shows that multiple cells 221, 222, 223, and 224 of the battery set assembled in the way of the present invention can all get into a balance state in the test.

It should be noted that the number of cells of the present invention is not limited to the number of multiple cells 221, 222, 223, and 224 shown in FIG. 2, as long as it is plural. Also, the number of internal subdivided units of the present invention is not limited to the number of internal subdivided units 241 and 242 shown in FIG. 2, as long as it is plural. The number of transmission power cords of the present invention depends on the number of internal subdivided units; meanwhile, the number of contact pins of the multi-pin charge terminal also depends on the number of internal subdivided units and is not limited to what is shown in FIG. 2.

It is noted that the above-mentioned embodiments are only for illustration. It is intended that the present invention cover modifications and variations of this invention provided they fall within the scope of the following claims and their equivalents. Therefore, it will be apparent to those skilled in the art that various modifications and variations can be made to the battery set of the present invention without departing from the scope or spirit of the invention.

## Claims

1. An individual-charge and merged-discharge battery set for being charged individually and discharged together, the individual-charge and merged-discharge battery comprising a plurality of cells (221, 222, 223, 224), and a discharge circuit board (21), **characterized in that**:
the individual-charge and merged-discharge battery set comprises a multi-pin charge terminal (23) and at least two independent charge units (241, 242), and discharge tips (281, 282) of the at least two independent charge units (241, 242) are jointly coupled to the discharge circuit board (21).

2. The individual-charge and merged-discharge battery set as claimed in claim 1, wherein charge tips (271, 272) of the at least two independent charge units are respectively coupled to contact pins (233, 234) of the multi-pin charge terminal.

3. The individual-charge and merged-discharge battery set as claimed in claim 1, wherein the individual-charge and merged-discharge battery set is a lithium-ion battery set.

4. The individual-charge and merged-discharge battery set as claimed in claim 1, wherein the individual-charge and merged-discharge battery set is a chargeable and dischargeable object.

5. The individual-charge and merged-discharge battery set as claimed in claim 1, wherein the individual-charge and merged-discharge battery set comprises means for prevent over discharging, wherein the means for prevent over discharging has a capability of charge/discharge protection for the battery set, so that the individual-charge and merged-discharge battery set being able to monitor an overall voltage of the battery set and a voltage of each cell to prevent over discharging.

6. The individual-charge and merged-discharge battery set according to any of the preceding claims, wherein the multi-pin charge terminal (23) has at least two contact pins (231, 232, 233, 234, 235, 236, and 237).

7. The individual-charge and merged-discharge battery set according to claim 6, wherein the number of contact pins is at least equal to the number of the independent charge units (241, 242).
